# EUROPÄISCHE PATENTSCHRIFT

(11) **EP 2 511 203 B1**
(45) Veröffentlichungstag und Bekanntmachung des Hinweises auf die Patenterteilung: **17.05.2017**
(21) Anmeldenummer: 12162836.6
(22) Anmeldetag: 02.04.2012
(51) Int. Cl.: B65G 47/28, B65G 54/02

(54) **Verfahren und Vorrichtung zum Transportieren von Behältnissen oder Behältnisgebinden**
Method and device for transporting containers or container assemblies
Procédé et dispositif de transport de récipients ou de paquets de récipients

(30) Priorität: 13.04.2011 DE 102011016855
(43) Veröffentlichungstag der Anmeldung: 17.10.2012
(73) Patentinhaber: Krones AG, 93073 Neutraubling (DE)
(72) Erfinder: Hüttner, Johann, 84066 Mallersdorf-Pfaffenberg (DE); Seger, Martin, 92318 Neumarkt in der Oberpfalz (DE)
(74) Vertreter: Bittner, Bernhard

(56) Entgegenhaltungen:
- EP-A1- 1 123 886
- WO-A1-03/105324
- WO-A2-2008/022296
- DE-A1- 19 505 997
- DE-A1-102008 040 204

## Beschreibung

Die vorliegende Erfindung bezieht sich auf ein Verfahren und eine Vorrichtung zum Transportieren von Behältnissen oder Behältnisgebinden. Derartige Transportvorrichtungen und Transportverfahren sind aus dem Stand der Technik seit langem bekannt. Diese dienen beispielsweise dazu, um Behältnisse oder auch Gruppen von Behältnissen von einer Behandlungsvorrichtung, wie beispielsweise einer Fülleinrichtung, zu einer weiteren Behandlungsvorrichtung, wie beispielsweise einer Etikettiermaschine oder einem Verschließer zu transportieren. Üblicherweise werden dabei die Behältnisse oder die Gruppen von Behältnissen vereinzelt transportiert.

Dabei weisen während des Transports diese Behältnisse oder Gruppen von Behältnissen vorgegebene Abstände auf. In der Herstellung der Getränkebehältnisse kann es dabei möglich sein, dass unterschiedliche Behandlungsaggregate mit unterschiedlichen Behältnisabständen arbeiten bzw. eine Teilung zwischen den Behältnissen geändert werden muss. Zu diesem Zweck sind aus dem Stand der Technik Vorrichtungen bekannt, welche eine Teilung der Behältnisse verändern. Als Beispiele hierfür sind Einteilschnecken zu nennen, welchen die Behältnisse ohne Abstand zugeführt werden und welche diese Abstände zwischen den Behältnissen anschließend verändern. Der Nachteil dieser Einteilschnecken besteht darin, dass diesen die Behältnisse lückenlos zugeführt werden müssen und diese wiederum die Behältnisse mit einem genau definierten Abstand weitergeben. Es kann jedoch teilweise wünschenswert sein, diese Abstände zwischen den Behältnissen beliebig einzustellen, beispielsweise von einem beliebigen Abstand auf einen weiteren beliebigen Abstand.

Transportsysteme zum Transportieren von Gegenständen sind in den Druckschriften DE 10 2008 040204 A1, WO 03/105324 A1, WO 2008/022296 A2 und DE 195 05 997 A1 gezeigt.

Der vorliegenden Erfindung liegt daher die Aufgabe zugrunde, Transportvorrichtungen zu schaffen, mit denen Abstände zwischen den zu fördernden Stückgütern einstellbar sind. Weiterhin soll es auch möglich sein, dass die Behältnisse oder Gruppen von Behältnissen in unterschiedlichen Abständen zugeführt werden können.

Dies wird erfindungsgemäß durch Verfahren und Vorrichtungen nach den unabhängigen Ansprüchen erreicht. Vorteilhafte Ausführungsformen und Weiterbildungen sind Gegenstand der Unteransprüche.

Bei einem erfindungsgemäßen Verfahren zum Transportieren von Behältnissen und/oder Behältnisgruppen wird eine Vielzahl von Behältnissen und/oder Behältnisgruppen entlang eines vorgegebenen Transportpfades und mit einem vorgegebenen Abstand zwischen den Behältnissen und/oder Behältnisgruppen zu einer Fördereinheit gefördert und die Fördereinheit transportiert die Behältnisse und/oder Behältnisgruppen mit wenigstens zwei ersten Förderelementen zum Fördern der Behältnisse und/oder Behältnisgruppen, wobei sich diese Förderelemente jeweils entlang eines ersten vorgegebenen Bewegungspfades an einem umlaufend ausgebildeten Träger bewegen und wobei diese Förderelemente mit jeweils einem Kontaktierkörper die Behältnisse und/oder Behältnisgruppen kontaktieren und so einen Abstand zwischen den Behältnissen oder Behältnisgruppen verändern.

Im Folgenden wird zur Vereinfachung anstelle des Terms Behältnisse und/oder Behältnisgruppen auch der Begriff Behältnisse verwendet. Unter einer Behältnisgruppe wird insbesondere eine Zusammenstellung aus mehreren Behältnissen (insbesondere ein Gebinde) verstanden, bei dem die einzelnen Behältnisse vorteilhaft in vorgegebener Position zueinander angeordnet sind.

Erfindungsgemäß werden die Förderelemente mittels einer als Linearmotor ausgebildeten Antriebseinrichtung angetrieben, wobei die Antriebseinrichtung in Wirkverbindung mit Magneten der Förderelemente steht und eine Steuereinrichtung eine voneinander unabhängige Bewegung der ersten Förderelemente erlaubt, sodass der Abstand zwischen zwei geförderten Behältnissen oder Behältnisgruppen veränderbar ist bzw. verändert wird.

Es wird daher erfindungsgemäß vorgeschlagen, eine Vorrichtung bzw. ein Verfahren zur Verfügung zu stellen, welche mittels linearmotorischen unabhängigen Antrieben eine im Wesentlichen beliebige Änderung eines Abstands zwischen den jeweiligen Behältnissen oder Behältnisgruppen erlaubt. Im Gegensatz zum Stand der Technik wird daher eine Teilung zwischen den Behältnissen oder Behältnisgruppen nicht um ein vorgegebenes Maß verändert und es ist auch nicht erforderlich, dass die Behältnisse mit einem genau vordefinierten Abstand dieser Vorrichtung zugeführt werden.

Bei einem vorteilhaften Verfahren werden die Behältnisse wenigstens zeitweise während des Transports mit den Förderelementen mittels einer Stützeinrichtung gestützt. So ist es möglich, dass die Behältnisse oder die Behältnisgruppen mittels eines Förderbandes angefördert werden und anschließend ein Abstand zwischen den Behältnissen verändert wird. Es wäre jedoch auch möglich, dass die Behältnisse beispielsweise mit Greifelementen geführt werden, welche die Tragringe der Behältnisse abstützen.

Bei einem weiteren vorteilhaften Verfahren werden die Behältnisse während ihres Transports mit den Förderelementen auch in einer parallel zu dem Transportpfad verlaufenden Richtung geführt. Auf diese Weise wird verhindert, dass die Behältnisse während ihres Transports seitlich von dem Transportpfad abweichen können. So ist es beispielsweise denkbar, dass seitliche Führungsschienen vorgesehen sind, welche die Behältnisse im Wesentlichen auf ihren Transportpfad halten. Es wäre jedoch auch möglich, dass die Förderelemente selbst derart angepasst sind, dass die Behältnisse oder Gruppen von Behältnissen (bzw. Gebinde) nicht seitlich von dem Transportpfad abweichen können. So können die Förderelemente beispielsweise gekrümmte Abschnitte oder Ausnehmungen aufweisen, welche jeweils zur Aufnahme der Behältnisse oder Behältnisgruppen dienen.

Auch können die Förderelemente selbst bewirken, dass die Behältnisse nicht seitlich von ihrem Transportpfad abweichen können, etwa indem die Förderelemente die Behältnisse oder Behältnisgruppen von zwei verschiedenen Seiten, welche sich gegenüber liegen, kontaktieren.

Vorteilhaft werden die Behältnisse mit der Fördereinheit in eine Füll- oder Etikettiereinrichtung, welche die Behältnisse befüllt bzw. etikettiert, transportiert.

Bei einem weiteren vorteilhaften Verfahren werden die Transportelemente wenigstens zeitweise auch entgegen der Transportrichtung der Behältnisse oder Behältnisgruppen bewegt. Diese Bewegung dient dabei vorteilhaft zur Rückführung der Förderelemente gegenüber ihrem Träger. Vorteilhaft ist eine Bewegungsgeschwindigkeit der Förderelemente entgegen dem Transportpfad der Behältnisse wenigstens zeitweise höher als eine Transportgeschwindigkeit der Förderelemente entlang oder in Richtung des Transportpfades. Bei einem weiteren vorteilhaften Verfahren ist eine Durchschnittsgeschwindigkeit der Förderelemente entgegen des Transportpfades bzw. der Transportrichtung der Behältnisse höher als eine Durchschnittsgeschwindigkeit der Förderelemente in Transportrichtung der Behältnisse oder Behältnisgruppen. Auf diese Weise kann erreicht werden, dass die einzelnen Förderelemente im Vergleich zu ihrer Transportbewegung relativ schnell wieder zurück zu ihrer Ausgangsposition geführt werden. Dies wiederum eröffnet die Möglichkeit, dass mit einer relativ geringen Anzahl an Förderelementen ausgekommen werden kann, wobei diese jeweils im Leerlauf, d.h. ohne ein Behältnis zu fördern, schneller rückgeführt werden als im Laufe der Transportbewegung mit einem Behältnis.

Vorteilhaft werden die Behältnisse oder Behältnisgruppen während ihres Transports mit der Fördereinheit an wenigstens drei von einander beabstandeten Bereichen des Behältnisses kontaktiert, beispielsweise an einem Bodenbereich und an zwei Wandbereichen. Zwischen diesen Bereichen liegt damit vorteilhaft keine Überschneidung vor.

Erfindungsgemäß werden die Behältnisse während ihres Transports mit den ersten Förderelementen durch einen seitlichen Eingriff hinsichtlich ihrer (Transport-) Geschwindigkeit verändert. Die Förderelemente können dabei beispielsweise kraftschlüssig mit entsprechenden Seitenwandungen der Behältnisse in Kontakt stehen

Die vorliegende Erfindung ist weiterhin auf eine Vorrichtung zum Transportieren von Behältnissen oder Behältnisgruppen gerichtet, welche eine erste Fördereinheit aufweist, welche die Behältnisse entlang eines vorgegebenen Transportpfads transportiert. Dabei weist die Fördereinheit eine Stützeinrichtung zum Stützen der Behältnisse oder der Behältnisgruppe während des Transports auf sowie wenigstens zwei erste Förderelemente zum Fördern der Behältnisse, wobei diese Förderelemente jeweils entlang eines ersten vorgegebenen Bewegungspfads bewegbar an einem umlaufend ausgebildeten Träger angeordnet sind und wobei diese Förderelemente jeweils einen Kontaktierkörper zum Kontaktieren der Behältnisse aufweisen sowie wenigstens einen Magneten und insbesondere einen Permanentmagneten.

Erfindungsgemäß weist die Vorrichtung eine als Linearmotor ausgebildete Antriebseinrichtung zum Antreiben der Förderelemente auf, wobei die Antriebseinrichtung (insbes. magnetisch) wenigstens zeitweise in Wirkverbindung mit den Permanentmagneten der Förderelemente steht, um diese zu bewegen und die Vorrichtung weiterhin eine Steuereinrichtung aufweist, welche eine von einander unabhängige Bewegung der ersten Förderelemente erlaubt, sodass ein Abstand zwischen zwei geförderten Behältnissen oder Behältnisgruppen veränderbar ist.

Es wird daher auch vorrichtungsseitig vorgeschlagen, dass unter Verwendung einer Linearmotortechnik mehrere Förderelemente bewegt werden, welche dann die Abstände zwischen dem zu fördernden Stückgut, d.h. den Behältnissen oder Behältnisgruppen, verändern können.

Bei der Stützeinrichtung kann es sich, wie oben beschrieben, beispielsweise wieder um ein Transportband handeln, dem gegenüber die Behältnisse verschiebbar sind. Es können jedoch auch Transportschienen oder feste Unterlagen vorgesehen sein. Bei einer weiteren Ausgestaltung wäre es jedoch auch denkbar, dass eine derartige Stützeinrichtung wie ein Transportband vorgeschaltet wird und anschließend die einzelnen Behältnisse gegriffen werden.

Bei einer weiteren vorteilhaften Ausführungsform weist die Vorrichtung eine Vielzahl von ersten Förderelementen auf, bevorzugt wenigstens 5 Förderelemente, bevorzugt mindestens 7 Förderelemente und besonders bevorzugt mindestens 10 Förderelemente.

Mit der erfindungsgemäßen Vorrichtung kann sowohl eine Teilung zwischen den Behältnissen oder Behältnisgruppen sowohl verringert als auch erhöht werden.

Weiter ist es möglich, dass eine Bewegung der Förderelemente, insbesondere während des Transports der Behältnisse, beschleunigt oder verzögert wird. Dabei kann die Bewegung eines Förderelements, wie oben erwähnt, unabhängig von der Bewegung eines weiteren Förderelements entlang des vorgegebenen Transportpfads erfolgen. So kann beispielsweise die Bewegung eines ersten Förderelements beschleunigt werden und die Bewegung eines weiteren Förderelements gleichzeitig verzögert werden. Vorteilhaft ist die Bewegung jedes Förderelementes lediglich durch das vorangehende und das nachfolgende Förderelement begrenzt.

Bei einer weiteren vorteilhaften Ausführungsform können die Förderelemente auch mehrere Kontaktierkörper aufweisen, welche in Längsrichtung der Behältnisse oder der Behältnisgruppen voneinander beabstandet sind. Auf diese Weise ist eine stabilere Führung der Behältnisse oder Behältnisgruppen möglich.

Bei einer weiteren vorteilhaften Ausführungsform kontaktiert wenigstens ein Kontaktierkörper das Behältnis oder eine Behältnisgruppe in einem Bereich, der von einem Boden der Behältnisse beabstandet ist. Die Behältnisgruppen können dabei beispielsweise als Gebinde angeordnet sein oder es wäre auch möglich, dass diese sich bereits in Kästen befinden und gemeinsam mit diesen Kästen transportiert werden.

Bei einer weiteren vorteilhaften Ausführungsform weist die Vorrichtung wenigstens ein zweites Förderelement zum Fördern der Behältnisse auf, wobei dieses zweite Förderelement bewegbar entlang eines zweiten vorgegebenen Bewegungspfades an einem zweiten umlaufenden Träger angeordnet ist und das zweite Förderelement ebenfalls einen Kontaktierkörper zum Kontaktieren der Behältnisse aufweist. Vorteilhaft weist auch das zweite Förderelement einen Permanentmagneten auf, um vorteilhaft mittels einer Antriebseinrichtung gegenüber dem zweiten Träger bewegt zu werden.

Dabei ist es möglich, dass die beiden Bewegungspfade parallel zueinander sind, sodass beispielsweise die Bewegungspfade in einer Längsrichtung der Behältnisse zueinander versetzt sind. Auch ist es möglich, dass der erste Bewegungspfad den zweiten Pfad umschließt oder es wäre auch möglich, dass die Bewegungspfade sich bezüglich des Transportpfades der Behältnisse gegenüber liegen. Weiterhin kann auch eine Vielzahl von zweiten Förderelementen vorgesehen sein, die besonders bevorzugt ebenfalls wieder unabhängig voneinander (insbesondere gegenüber dem zweiten Träger) bewegbar bzw. steuerbar sind.

Bei einer vorteilhaften Ausführungsform ist wenigstens ein Behältnis entlang seiner Transportrichtung zwischen dem Kontaktierkörper des zweiten Förderelements und einem Kontaktierkörper eines ersten Förderelements förderbar. So ist es möglich, dass die beiden Kontaktierkörper das Behältnis an zwei zueinander gegenüber liegenden Seiten kontaktieren. Auf diese Weise ist auch ein Abstand bzw. eine Teilung zwischen den Behältnissen oder Behältnisgruppen einstellbar. Bei einer vorteilhaften Ausführungsform kontaktieren die Kontaktierkörper das Behältnis an einander gegenüber liegenden Wänden.

Bei einer weiteren vorteilhaften Ausführungsform weist die Vorrichtung eine Positionserfassungseinrichtung zum Erfassen einer Position wenigstens eines Förderelements entlang des Transportpfads auf. In Abhängigkeit von dieser Position können vorteilhaft die Förderelemente gesteuert, d.h. beispielsweise beschleunigt oder verzögert werden. Dabei kann diese Positionserfassungseinrichtung beispielsweise Lichtschrankenelemente aufweisen, welche die Positionen der Förderelemente erfassen. Daneben wäre es jedoch auch möglich, dass die Positionserfassung induktive Elemente aufweist, wie beispielsweise Elektromagneten, mit denen die Position der einzelnen Förderelemente erfasst werden kann. Daneben wäre es auch denkbar, dass die Positionserfassungseinrichtung in die Antriebseinrichtung zum Antreiben der Förderelemente integriert ist und beispielsweise aufgrund der fließenden Ströme jeweils die Position der einzelnen Förderelemente ermittelt. Vorteilhaft ist dabei die Position sämtlicher Förderelemente bestimmbar. Durch diese Positionserfassung kann auch eine Regelung der Bewegungen der einzelnen Förderelemente vorgenommen werden.

Bei einer weiteren vorteilhaften Ausführungsform weist wenigstens ein Förderelement einen Grundkörper auf und der Kontaktierkörper ist besonders bevorzugt beweglich an diesen Grundkörper angeordnet. Der Grundkörper kann dabei beweglich an dem oben erwähnten Träger angeordnet sein und der Kontaktierkörper wiederum an dem besagten Grundkörper. Vorteilhaft ist auch eine Antriebseinrichtung zum Erzeugen einer Bewegung des Kontaktierkörpers gegenüber dem Grundkörper vorgesehen. Durch diese Bewegung kann beispielsweise eine Drehung der Behältnisse oder Behältnisgruppen bewirkt werden. Vorteilhaft erfolgt diese Bewegung in einer Richtung, die nicht parallel zu dem Transportpfad der Behältnisse oder Behältnisgruppen ist und die insbesondere schräg oder senkrecht hierzu ist. Vorteilhaft kann die Drehung auch durch eine zur normalen Transportbewegung überlagerte, kurzzeitige Relativbewegung der gegenüberliegenden Förderelemente erreicht werden. Zusätzlich zu dem Transport der Behältnisse und der Veränderung des Abstands zwischen den Behältnissen ist so auch eine Drehung der Behältnisse oder Behältnisgruppen um eine vorgegebene Drehachse denkbar.

Besonders vorteilhaft wird die Beweglichkeit des Kontaktkörpers zum Grundkörpers auch dazu genutzt, um unerwünschte Schubkräfte von nachfolgenden Behältnissen oder Behältnisgruppen abzubremsen. Dabei wirkt der Kontaktkörper ähnlich einer Auflaufbremse. Je höher die Schubkraft der nachfolgenden Behältnisse wirkt, desto intensiver wird eine Bremse aktiviert, welche dann die Schubkräfte aufnimmt und verhindert, das der Grundkörper geschoben wird und somit seine Synchronität zu den Elektromagneten verliert. Dies wird im allgemeinen als Schleppfehler bezeichnet.

Auch kann die Bewegbarkeit des Kontaktierkörpers gegenüber dem Grundkörper genutzt werden, um die Vorrichtung auf unterschiedliche Dimensionen der Behältnisse oder Behältnisgruppen umzustellen. Vorteilhaft ist daher wenigstens ein Förderelement und sind bevorzugt mehrere Förderelemente zur Aufnahme unterschiedlicher Behältnisse oder Behältnisgruppen geeignet und/oder auf unterschiedlich dimensionierte Behältnisse oder Behältnisgruppen umstellbar.

Bei einer weiteren vorteilhaften Ausführungsform bewegt sich wenigstens ein Grundkörper wenigstens zeitweise parallel zu dem Transportpfad der Behältnisse.

Bei einer weiteren vorteilhaften Ausführungsform bewegen sich alle Grundkörper der ersten Förderelemente und besonders bevorzugt auch alle Grundkörper der zweiten Förderelemente wenigstens zeitweise parallel zu dem Transportpfad der Behältnisse. Besonders bevorzugt ist dabei wenigstens ein Grundkörper seitlich zu dem Transportpfad der Behältnisse versetzt. Vorteilhaft sind mehrere Grundkörper besonders bevorzugt sämtliche Grundkörper wenigstens zeitweise seitlich gegenüber dem Transportpfad der Behältnisse versetzt. Ganz besonders vorteilhaft erfolgt der Eingriff des Kontaktkörpers oberhalb der ersten Stützfläche, welche durch das Transportband gebildet wird, und besonders vorteilhaft von der Seite.

Bei einer weiteren vorteilhaften Ausführungsform weist die Vorrichtung wenigstens eine Führungseinrichtung auf, welche eine Bewegung der Behältnisse in einer parallel zu dem Transportpfad verlaufenden Richtung führt. So kann beispielsweise eine seitliche Schiene vorgesehen sein, vorteilhaft zwei Schienen. Damit sind hier Führungselemente vorgesehen, welche die Behältnisse auf ihrem Transportpfad halten. Es wäre jedoch auch denkbar, dass die Führungseinrichtung durch das Transportelement selbst ausgebildet wird, dass also beispielsweise die Behältnisse oder die Behältnisgruppen zwischen zwei gegenüberliegenden Förderelementen eingeklemmt werden.

Bei einer weiteren vorteilhaften Ausführungsform schließt sich an die Fördereinheit eine Einrichtung zum Behandeln der Behältnisse an. Bei dieser weiteren Einrichtung zum Behandeln von Behältnissen kann es sich beispielsweise um eine Füllmaschine handeln, welche die Behältnisse mit einem flüssigen Medium und insbesondere einer Flüssigkeit befüllt. Es kann sich bei dieser weiteren Einrichtung jedoch auch um eine Verschließmaschine handeln, welche die Behältnisse mit Verschlüssen verschließt, um eine Etikettiereinrichtung oder dergleichen. Daneben kann es sich, sofern Behältnisgruppen transportiert werden, bei dieser nachgeordneten Einrichtung um eine Palletiereinrichtung handeln.

Bei einer weiteren vorteilhaften Ausführungsform ist in der Transportrichtung der Behältnisse vor der Fördereinheit eine Vorrichtung zum Umformen von Kunststoffvorformlingen zu Kunststoffbehältnissen wie insbesondere, aber nicht ausschließlich, eine Streckblasmaschine angeordnet.

Bei einer weiteren vorteilhaften Ausführungsform ist die Vorrichtung und/oder sind die Förderelemente derart gestaltet, dass die Behältnisse (zumindest zeitweise) während ihres Transports mit den ersten Förderelementen durch einen seitlichen Eingriff hinsichtlich ihrer Geschwindigkeit verändert werden.

Weitere vorteilhafte Ausführungsformen ergeben sich aus den beigefügten Zeichnungen:
Darin zeigen:
   - Fig. 1: Eine Draufsicht auf eine erfindungsgemäße Vorrichtung in einer ersten Ausführungsform;
   - Fig. 2a: Eine Sicht entlang der Linie AA aus Fig. 1;
   - Fig. 2b: Eine weitere Seitenansicht der Vorrichtung aus Fig. 1;
   - Fig. 3: Eine erfindungsgemäße Vorrichtung in einer weiteren Ausführungsform;
   - Fig. 4a: Eine Sicht der Vorrichtung aus Fig. 3 entlang der Linie AA aus Fig. 3; und
   - Fig. 4b: Eine weitere Seitenansicht der Vorrichtung aus Fig. 3.

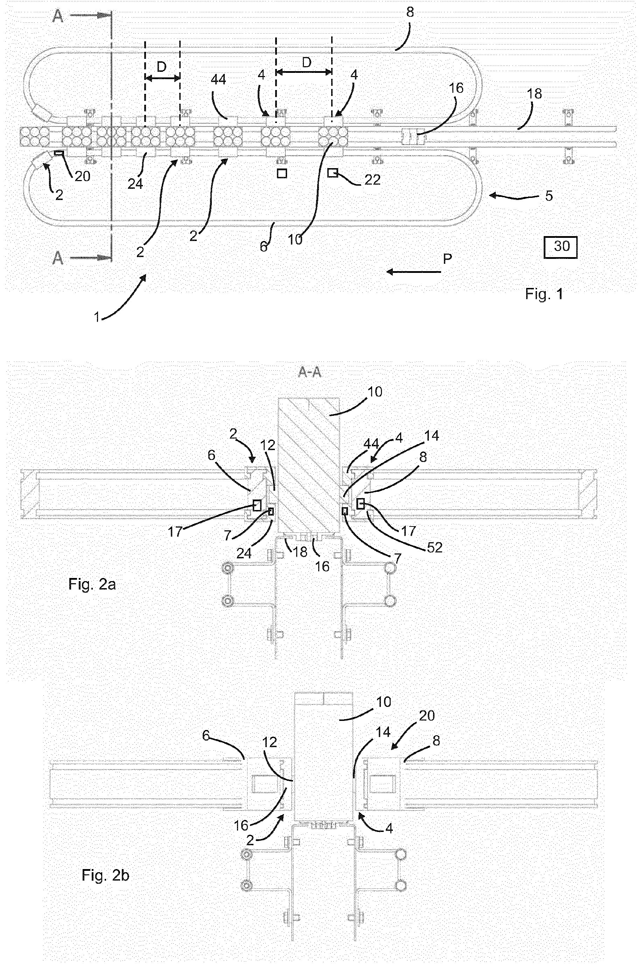

Figur 1 zeigt eine erfindungsgemäße Vorrichtung 1 zum Transportieren von Behältnisgruppen 10. Genauer gesagt handelt es sich hier um Gebinde aus jeweils 6 Behältnissen, die entlang eines Transportpfades P transportiert werden.

Die Bezugszeichen 2 beziehen sich jeweils auf erste Förderelemente, welche hier die jeweiligen Behältnisgruppen 10 seitlich kontaktieren und entlang des Transportpfades P fördern. Dabei sind die einzelnen ersten Förderelemente 2 jeweils (stationär) an einem umlaufenden Träger 6 ausgebildet. Das Bezugszeichen 16 kennzeichnet eine Stützeinrichtung, welche die Behältnisse oder Behältnisgruppen 10 stützt. Dabei kann es sich hier um eine umlaufende Kette handeln, auf der die Behältnisse oder Behältnisgruppen 10 transportiert werden. Das Bezugszeichen 18 kennzeichnet seitliche (stationäre) Träger, gegenüber denen sich wiederum die Stützeinrichtung 16 abstützen kann. Die Transportkette ist hier nur vereinfacht dargestellt, es kann sich jedoch hier bevorzugt um eine vollständig umlaufende Kette handeln, sodass insgesamt eine bewegliche Stützfläche für die Behältnisse oder Gebinde 10 gebildet wird. Die Stützeinrichtungen 16 bewegen sich vorteilhaft mit konstanter Geschwindigkeit, insbeondere entlang des Transportpfades P

Das Bezugszeichen 20 kennzeichnet grob schematisch eine Antriebseinrichtung, die zum Bewegen der einzelnen Förderelemente 2 dient. So kann an dem Träger eine Vielzahl von Elektromagneten angeordnet sein, die in der Art eines Linearmotors jeweils unabhängig steuerbar sind und die einzelnen Förderelemente 2 bewegen können. Das Bezugszeichen 30 kennzeichnet grob schematisch eine Steuerungseinrichtung, welche die Bewegungen der einzelnen Förderelemente 2 steuert. Bei der in Figur 1 gezeigten Darstellung wird ein Abstand D zwischen den einzelnen Gebinden entlang des Transportpfades P verringert, d.h. die einzelnen Förderelemente 2 werden derart gesteuert, dass sich der Abstand der einlaufenden Gebinde von rechts nach links verringert. Neben den gezeigten Förderelementen können noch eine Vielzahl weiterer (nicht gezeigter) Förderelemente 2 angeordnet sein, die sich wieder entlang des Trägers 6 entgegen dem Uhrzeigersinn bewegen.

Das Bezugszeichen 24 kennzeichnet einen Grundkörper der einzelnen Förderelemente, der beweglich an dem Träger 6 angeordnet ist.

Die Bezugszeichen 4 kennzeichnen zweite Förderelemente, die an einem zweiten Träger 8 ebenfalls bewegbar und unabhängig voneinander steuerbar angeordnet sind. Auch diese zweiten Förderelemente weisen dabei jeweils Grundkörper 44 auf. Bei der in Figur 1 gezeigten Ausführungsform werden die Gebinde 10 jeweils zwischen einem ersten Förderelement 2 und einem zweiten Förderelement 4 aufgenommen bzw. eingeklemmt und auf diese Weise transportiert. Bei der in Figur 1 gezeigten Ausführungsform bewegen sich dabei jeweils ein Förderelement 2 und ein diesem zugeordnetes Förderelement 4 zumindest abschnittsweise mit der gleichen Geschwindigkeit. Bevorzugt bewegen sich die ersten Förderelemente 2 und die zweiten Förderelemente 4 in einander entgegen gesetzten Umlaufrichtungen.

Das Bezugszeichen 22 kennzeichnet eine Positionserfassungseinrichtung, welche dazu dient, um die Positionen der einzelnen Förderelemente gegenüber dem Träger zu bestimmen. In Abhängigkeit von dieser bestimmten Position kann die Bewegung der Förderelemente 2 geregelt werden. Entsprechende Positionserfassungseinrichtungen können auch für die zweiten Förderelemente 4 vorhanden sein. Das Bezugszeichen 5 kennzeichnet die Transporteinheit in ihrer Gesamtheit.

Figur 2a zeigt eine Schnittdarstellung entlang der Linie AA aus Figur 1. Man erkennt hier wiederum die beiden Träger 6 und 8, an denen die Förderelemente 2 und 4 angeordnet sind. Das Bezugszeichen 7 kennzeichnet grob schematisch einen Permanentmagneten, der an den einzelnen Förderelementen 4 jeweils angeordnet ist. Dieser Permanentmagnet wirkt dabei mit einem Elektromagneten bzw. einer Vielzahl von Elektromagneten 17, die an dem Träger 8 (und auch an dem Träger 6) angeordnet sind, zusammen, um auf diese Weise die Bewegung der einzelnen Förderelemente 2 und 4 zu erreichen. Man erkennt hier auch einen ersten Kontaktierkörper 12, der an dem ersten Förderelement 2 angeordnet ist, sowie einen zweiten Kontaktierkörper 14, der an dem Förderelement 4 angeordnet ist. Das Gebinde 10 wird zwischen diesen beiden Kontaktierkörpern aufgenommen. Auch erkennt man in dieser Darstellung wiederum die Stützeinrichtung 16, die zum Stützen des Gebindes 10 dient und die sich selbst wiederum gegenüber einem Träger 18 abstützt. Der Antrieb für die Stützeinrichtungen 16 ist hier nicht dargestellt. Die Kontaktierelemente 12, 14 können dabei elastisch ausgebildet oder federnd gelagert sein.

Die Förderelemente 2, 4 können dabei die jeweiligen Träger 6, 8 hintergreifen um so an diesen gehalten zu werden. So können die Träger 6, 8 Ausnehmungen 52 aufweisen, in welche Vorsprünge der jeweiligen Förderelemete 2, 4 eingreifen um so die Führung zu verbessern. Auch wäre es denkbar, dass Luftdruck eingesetzt wird, um eine Reibung zwischen den einzelnen Förderelementen 2, 4 und deren jeweiligen Trägern 6, 8 zu verringern.

Figur 2b zeigt eine weitere Darstellung der erfindungsgemäßen Vorrichtung. Auch hier erkennt man wiederum die beiden Träger 6 und 8, an denen die Förderelemente 2 und 4 beweglich angeordnet sind. Die Förderelemente 2 und 4 können dabei beispielsweise mittels Rollen gegenüber den Trägern 6 und 8 beweglich gehalten werden, es wäre jedoch auch eine rein magnetische Führung denkbar, bzw. auch eine gleitende Verbindung. Daneben könnte auch eine weitere Stützeinrichtung vorgesehen sein, welche die beiden Förderelemente 2 und 4 abstützt und gegenüber diesen diese beispielsweise rollen können.

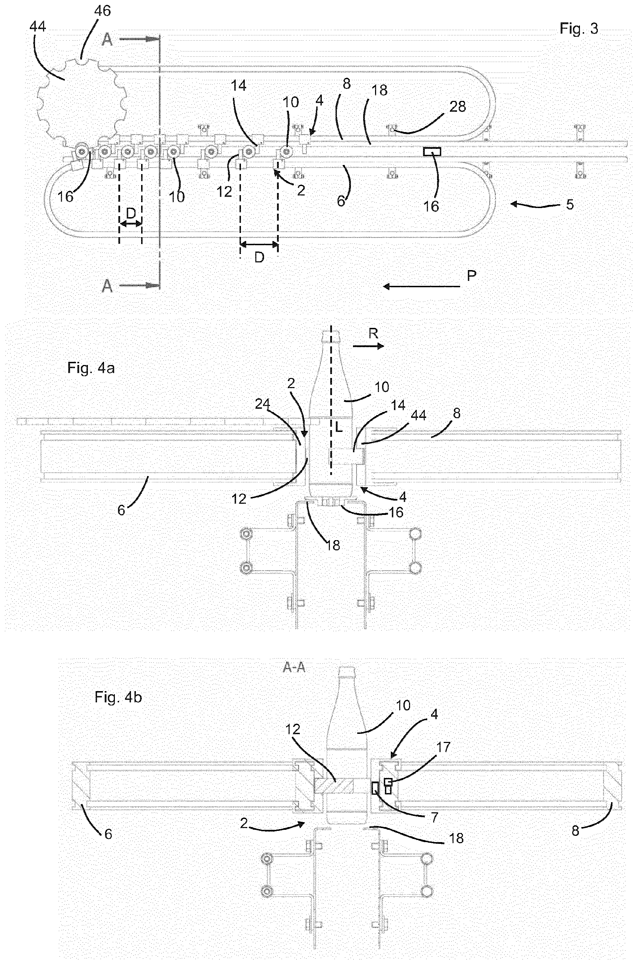

Figur 3 zeigt eine weitere Ausführungsform, die hier zum Transportieren von Behältnissen 10 dient. Auch hier ist eine Vielzahl von ersten Förderelementen 2 vorgesehen, welche jeweils mit Kontaktierkörpern 12 die Behältnisse kontaktieren. Bei der in Figur 3 gezeigten Ausführungsform wird ebenfalls ein Abstand D zwischen den Behältnissen von rechts nach links soweit verringert, dass diese genau in ein Eintaktrad 48, welches an seinem Außenumfang eine Vielzahl von Ausnehmungen 46 aufweist, eingreifen können. Daneben sind auch hier Stützeinrichtungen 16 (nur schematisch dargestellt), wie etwa eine Transportkette, vorgesehen.

Die in Figur 3 gezeigte Vorrichtung weist daneben auch eine Vielzahl von zweiten Förderelementen 4 auf, die sich ebenfalls entlang des Transportpfades P bewegen. Dabei werden hier die einzelnen Behältnisse 10 jeweils zwischen einem Förderelement 2 und einem zweiten Förderelement 4 aufgenommen. Genauer werden die Behältnisse hier an einander gegenüberliegenden Seiten von den jeweiligen Kontaktierkörpern 12 und 14 kontaktiert und so gewissermaßen entlang des Transportpfades P eingeklemmt.

Figur 4a zeigt eine Ansicht entlang der Linie AA aus Figur 3. Man erkennt hier wiederum die beiden Förderelemente 2 und 4, die jeweils an den Trägern 6 und 8 beweglich angeordnet sind. Das Bezugszeichen 7 kennzeichnet wieder grob schematisch einen Permanentmagneten, der an den jeweiligen Förderelementen 4 (und entsprechend auch an den Förderelementen 2) angeordnet ist. Das Bezugszeichen 17 kennzeichnet auch hier wieder einen Elektromagneten bzw. eine Reihe bzw. Vielzahl von Elektromagneten, die zum Bewegen der einzelnen Förderelemente 2 und 4 dienen.

Figur 4b zeigt eine weitere Ansicht der in Figur 2 gezeigten Vorrichtung. Man erkennt hier weiterhin wieder die Stützeinrichtung 16, die zum Abstützen der Behältnisse dient. Diese Stützeinrichtung ist hier in der Längsrichtung L der Behältnisse 10 unterhalb der Behältnisse angeordnet.

Die Förderelemente 2 und 4 nehmen hier gleichzeitig auch eine Stabilisation der Behältnisse in der Richtung R, d.h. senkrecht zu dem Transportpfad P war, sodass die Behältnisse nicht seitlich herabkippen oder -fallen können. Die beiden Kontaktierelemente 12 und 14 sind hier jeweils beweglich gegenüber ihren Grundkörpern 24 und 44 angeordnet. Auf diese Weise kann auch eine Drehung der Behältnisse bewirkt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: erste Förderelemente
- 4: zweite Förderelemente
- 5: Fördereinheit
- 6: umlaufender Träger
- 7: Permanentmagnet
- 8: umlaufender Träger
- 10: Behältnisgruppen/Behältnisse
- 12: erster Kontaktierkörper
- 14: zweiter Kontaktierkörper
- 16: Stützeinrichtung
- 17: Elektromagnete
- 18: Träger (für Stützeinrichtung 16)
- 20: Antriebseinrichtung
- 22: Positionserfassungseinrichtung
- 24: Grundkörper
- 30: Steuerungseinrichtung
- 32: Führungseinrichtung
- 44: Grundkörper
- 46: Ausnehmungen
- 48: Eintaktrad
- 52: Ausnehmung
- AA: Linie
- D: Abstand zwischen Behältnissen
- L: Längsrichtung
- P: Transportpfad
- R: Richtung

## Patentansprüche

1. Verfahren zum Transportieren von Behältnissen (10) oder Behältnisgruppen (10), wobei eine Vielzahl von Behältnissen (10) oder Behältnisgruppen entlang eines vorgegebenen Transportpfades und mit einem vorgegebenen Abstand (D) zwischen den Behältnissen (10) oder Behältnisgruppen zu einer Fördereinheit (5) gefördert wird und die Fördereinheit (5) die Behältnisse (10) oder Behältnisgruppen (10) mit wenigstens zwei ersten Förderelementen (2) zum Fördern der Behältnisse (10) oder Behältnisgruppen transportiert, wobei sich diese ersten Förderelemente (2) jeweils entlang eines ersten vorgegebenen Bewegungspfades an einem umlaufend ausgebildeten Träger (6) bewegen und wobei diese ersten Förderelemente (2) mit jeweils zumindest einem Kontaktierkörper (12) die Behältnisse (10) oder Behältnisgruppen kontaktieren und so einen Abstand zwischen den Behältnissen (10) oder Behältnisgruppen (10) verändern, wobei
die Förderelemente (2) mittels einer als Linearmotor ausgebildeten Antriebseinrichtung (20) angetrieben werden, wobei die Antriebseinrichtung (20) in Wirkverbindung mit Magneten der Förderelemente (2) steht, und
**gekennzeichnet, durch**
eine Steuereinrichtung (30), welche eine voneinander unabhängige Bewegung der ersten Förderelemente (2) erlaubt, so dass der Abstand zwischen zwei geförderten Behältnissen (10) oder Behältnisgruppen (10) während ihres Transports veränderbar ist und die Behältnisse (10) während ihres Transports mit den ersten Förderelementen (2) durch einen seitlichen Eingriff in der Geschwindigkeit verändert werden.

2. Verfahren nach Anspruch 1,
**dadurch gekennzeichnet, dass**
die Behältnisse (10) wenigstens zeitweise während ihres Transports mit den ersten Förderelementen (2) mittels einer Stützeinrichtung gestützt werden.

3. Verfahren nach wenigstens einem der vorangegangenen Ansprüche,
**dadurch gekennzeichnet, dass**
die Behältnisse (10) während ihres Transports mit den ersten Förderelementen (2) auch in einer parallel zu dem Transportpfad verlaufenden Richtung geführt werden.

4. Vorrichtung zum Transportieren von Behältnissen (10) oder Behältnisgruppen (10) mit einer ersten Fördereinheit (5), welche die Behältnisse (10) oder Behältnisgruppen entlang eines vorgegebenen Transportpfades (P) transportiert, wobei die Fördereinheit eine Stützeinrichtung (16) zum Stützen der Behältnisse (10) oder Behältnisgruppen während deren Transport aufweist, mit wenigstens zwei ersten Förderelementen (2) zum Fördern der Behältnisse (10) oder Behältnisgruppen, wobei diese ersten Förderelemente (2) jeweils entlang eines ersten vorgegebenen Bewegungspfades bewegbar an einem umlaufend ausgebildeten Träger (6) angeordnet sind, und wobei diese Förderelemente (2) jeweils zumindest einen Kontaktierkörper (12) zum Kontaktieren der Behältnisse (10) oder Behältnisgruppe aufweisen sowie jeweils wenigstens einen Permanentmagneten (7),
wobei
die Vorrichtung (1) eine als Linearmotor ausgebildete Antriebseinrichtung (20) zum Antreiben der Förderelemente (2) aufweist, wobei die Antriebseinrichtung (20) in Wirkverbindung mit den Permanentmagneten (7) der Förderelemente (2) steht um diese zu bewegen,
**gekennzeichnet, durch** eine Steuerungseinrichtung (30), welche eine voneinander unabhängige Bewegung der ersten Förderelemente (2) erlaubt, so dass ein Abstand (D) zwischen zwei geförderten Behältnissen (10) während ihres Transports veränderbar ist und die Vorrichtung derart gestaltet ist, dass die Behältnisse (10) während ihres Transports mit den ersten Förderelementen (2) **durch** einen seitlichen Eingriff in der Geschwindigkeit verändert werden.

5. Vorrichtung nach Anspruch 4,
**dadurch gekennzeichnet, dass**
die Vorrichtung (1) wenigstens ein zweites Förderelement (4) zum Fördern der Behältnisse (10) aufweist, wobei dieses zweite Förderelement (4) bewegbar entlang eines zweiten vorgegebenen Bewegungspfades an einem zweiten umlaufenden Träger (8) angeordnet ist und das zweite Förderelement (4) einen Kontaktierkörper (14) zum Kontaktieren der Behältnisse (10) aufweist.

6. Vorrichtung nach Anspruch 4,
**dadurch gekennzeichnet, dass**
wenigstens ein Behältnis (10) entlang seiner Transportrichtung zwischen einem Kontaktierkörper (14) des zweiten Förderelements (4) und einem Kontaktierkörper (12) eines ersten Förderelements (2) förderbar ist.

7. Vorrichtung nach wenigstens einem der vorangegangenen Ansprüche 4 - 6,
**dadurch gekennzeichnet, dass**
die Vorrichtung eine Positionserfassungseinrichtung (22) zum Erfassen einer Position wenigstens eines Förderelements (2, 4) entlang des Transportpfades aufweist.

8. Vorrichtung nach wenigstens einem der vorangegangenen Ansprüche 4 - 7,
**dadurch gekennzeichnet, dass**
wenigstens ein Förderelement (2, 4) einen Grundkörper (24) aufweist und der Kontaktierkörper (12) beweglich an diesem Grundkörper (24) angeordnet ist

9. Vorrichtung nach Anspruch 4,
**dadurch gekennzeichnet, dass**
eine Antriebseinrichtung zum Erzeugen einer Bewegung des Kontaktierkörpers (12, 14) gegenüber dem Grundkörper (24, 44) vorgesehen ist.

10. Vorrichtung nach wenigstens einem der vorangegangenen Ansprüche 4 - 9,
**dadurch gekennzeichnet, dass**
die Vorrichtung (1) wenigstens eine Führungseinrichtung aufweist, welche eine Bewegung der Behältnisse (10) in einer parallel zu dem Transportpfad verlaufenden Richtung führt.

## Claims

1. A method for transporting containers (10) or groups of containers (10), wherein a plurality of containers (10) or groups of containers is conveyed along a predefined transport path and with a predefined distance (D) between the containers (10) or groups of containers to a conveyor unit (5) and the conveyor unit (5) transports the containers (10) or groups of containers (10) by means of at least two first conveying elements (2) for conveying the containers (10) or groups of containers, wherein these first conveying elements (2) respectively move along a first predefined movement path on a circulating carrier (6), and wherein the first conveying elements (2) contact the containers (10) or groups of containers with respectively one contacting body (12) and in this way vary a distance between the containers (10) or groups of containers (10), wherein the conveying elements (2) are driven by means of a drive unit (20) implemented as a linear motor, wherein the drive unit (20) is in operative connection with magnets of the conveying elements (2)
**characterised in that**
a control unit (30) allows an independent movement of the first conveying elements (2), so that the distance between two conveyed containers (10) or groups of containers (10) can be changed during the transport and the speed of the containers (10) is modified during the transport thereof by the first conveying elements (2) by way of a lateral engagement.

2. The method as claimed in claim 1,
**characterised in that**
the containers (10) are supported by means of a support unit at least at times during transport by the first conveying elements (2).

3. The method as claimed in at least one of the preceding claims,
**characterised in that**
the containers (10) are guided during transport thereof by the first conveying elements (2) also in a direction extending parallel to the transport path.

4. An apparatus for transporting containers (10) or groups of containers (10) using a first conveyor unit (5) that transports the containers (10) or groups of containers along a predefined transport path (P) wherein the conveyor unit has a support unit (16) for supporting the containers (10) or groups of containers during transport thereof, including at least two first conveying elements (2) for conveying the containers (10) or groups of containers, wherein these first conveying elements (2) are respectively arranged along a first predefined travel path in a manner to be movable on a circulating carrier (6), and wherein these conveying elements (2) each have a contacting body (12) for contacting the containers (10) or groups of containers as well as respectively at least one permanent magnet (7) wherein the apparatus (1) has a drive unit (20) implemented as a linear motor for driving the conveying elements (2), wherein the drive unit (20) is in operative connection with the permanent magnets (7) of the conveying elements (2) in order to move the latter,
**characterised in that**
the apparatus (1) includes a control unit (30) that allows an independent movement of the first conveying elements (2), so that a distance (D) between two conveyed containers (10) can be changed during the transport and the speed of the containers (10) is modified during the transport thereof by the first conveying elements (2) by way of a lateral engagement.

5. The apparatus as claimed in claim 4,
**characterised in that**
the apparatus (1) has at least one second conveying element (4) for conveying the containers (10), wherein the second conveying element (4) is arranged to be movable along a second predefined movement path on a second circulating carrier (8), and said second conveying element (4) has a contacting body (14) for contacting the containers (10).

6. The apparatus as claimed in claim 4,
**characterised in that**
at least one container (10) can be conveyed along the transport direction thereof between a contacting body (14) of said second conveying element (4) and a contacting body (12) of a first conveying element (2).

7. The apparatus as claimed in at least one of the preceding claims 4 - 6,
**characterised in that**
the apparatus includes a position detection unit (22) for detecting a position of at least one conveying element (2, 4) along the transport path.

8. The apparatus as claimed in at least one of the preceding claims 4 - 7,
**characterised in that**
at least one conveying element (2, 4) includes a base body (24) and said contacting body (12) is provided in a movable manner on said base body (24).

9. The apparatus as claimed in claim 4,
**characterised in that**
a drive unit for generating a movement of said contacting body (12, 14) relative to said base body (24, 44) is provided.

10. The apparatus as claimed in at least one of the preceding claims 4 - 9,
**characterised in that**
the apparatus (1) includes at least one guiding unit that guides a movement of the containers (10) in a direction extending parallel to the transport path.

## Revendications

1. Procédé de transport de récipients (10) ou de groupes de récipients (10), dans lequel une pluralité de récipients (10) ou de groupes de récipients étant transportés vers une unité de transport (5) le long d'un trajet de transport prédéfini et selon une distance (D) prédéfinie entre les récipients (10) ou les groupes de récipients et l'unité de transport (5) transportant les récipients (10) ou les groupes de récipients (10) au moyen d'au moins deux premiers éléments de transport (2) destinés à transporter les récipients (10) ou les groupes de récipients, dans lequel ces premiers éléments de transport (2) se déplaçant chacun le long d'un premier trajet de déplacement prédéfini sur un support (6) de configuration circulaire et dans lequel ces premiers éléments de transport (2) ayant chacun au moins un corps de mise en contact (12) en contact avec les récipients (10) ou les groupes de récipients et modifiant ainsi une distance entre les récipients (10) ou les groupes de récipients (10),
dans lequel
les éléments de transport (2) étant entraînés au moyen d'un système d'entraînement (20) réalisé sous la forme d'un moteur linéaire, le système d'entraînement (20) étant en liaison fonctionnelle avec des aimants des éléments de transport (2), et
**caractérisé par**
un système de commande (30), lequel permet un déplacement des premiers éléments de transport (2) indépendamment les uns des autres, de sorte que la distance entre deux récipients (10) ou groupes de récipients (10) transportés peut être modifiée pendant le transport de ces derniers et la vitesse des récipients (10) est modifiée pendant le transport de ces derniers au moyen des premiers éléments de transport (2), par un engagement latéral.

2. Procédé selon la revendication 1,
**caractérisé en ce que**
les récipients (10) sont soutenus au moins par intermittence pendant leur transport par les premiers éléments de transport (2) au moyen d'un système de soutien.

3. Procédé selon au moins l'une des revendications précédentes,
**caractérisé en ce que**
les récipients (10) sont guidés pendant leur transport au moyen des premiers éléments de transport (2) également dans une direction s'étendant parallèlement au trajet de transport.

4. Dispositif de transport de récipients (10) ou de groupes de récipients (10) comprenant une première unité de transport (5), laquelle transportant les récipients (10) ou les groupes de récipients le long d'un trajet de transport (P) prédéfini, dans lequel l'unité de transport comprenant un système de soutien (16) destiné à soutenir les récipients (10) ou les groupes de récipients pendant le transport de ces derniers, au moins deux premiers éléments de transport (2) destinés à transporter les récipients (10) ou les groupes de récipients, dans lequel ces premiers éléments de transport (2) sont agencés sur un support (6) de configuration circulaire de manière à pouvoir être déplacés respectivement le long d'un premier trajet de transport prédéfini, et dans lequel ces éléments de transport (2) comprenant chacun au moins un corps de mise en contact (12) leur permettant d'être en contact avec les récipients (10) ou le groupe de récipients ainsi que respectivement au moins un aimant permanent (7),
dans lequel
le dispositif (1) comprend un système d'entraînement (20) réalisé sous la forme d'un moteur linéaire et servant à entraîner les éléments de transport (2), le système d'entraînement (20) étant en liaison fonctionnelle avec les aimants permanents (7) des éléments de transport (2) afin de les déplacer,
**caractérisé par** un système de commande (30), lequel permet un déplacement des premiers éléments de transport (2) indépendamment les uns des autres, de sorte qu'une distance (D) entre deux récipients (10) transportés peut être modifiée pendant le transport de ces derniers et le dispositif est conçu de telle sorte que la vitesse des récipients (10) pendant le transport de ces derniers au moyen des premiers éléments de transport (2) peut être modifiée par un engagement latérale.

5. Dispositif selon la revendication 4,
**caractérisé en ce que**
le dispositif (1) comprend au moins un deuxième élément de transport (4) destiné à transporter les récipients (10), dans lequel ce deuxième élément de transport (4) est agencé sur un deuxième support (8) périphérique de manière à pouvoir être déplacé le long d'un deuxième trajet de transport prédéfini, et le deuxième élément de transport (2) comprend un corps de mise en contact (14) lui permettant d'être en contact avec les récipients (10).

6. Dispositif selon la revendication 4,
**caractérisé en ce que**
au moins un récipient (10) peut être transporté le long de sa direction de transport entre un corps de mise en contact (14) du deuxième élément de transport (4) et un corps de mise en contact (12) d'un premier élément de transport (2).

7. Dispositif selon au moins l'une des revendications précédentes 4 à 6,
**caractérisé en ce que**
le dispositif comprend un système de détection de position (22) servant à détecter une position d'au moins un élément de transport (2, 4) le long du trajet de transport.

8. Dispositif selon au moins l'une des revendications précédentes 4 à 7,
**caractérisé en ce que**
au moins un élément de transport (2, 4) comprend un corps de base (24) et le corps de mise en contact (12) est monté mobile sur ce corps de base (24).

9. Dispositif selon la revendication 4,
**caractérisé en ce que**
un système d'entraînement destiné à générer un déplacement du corps de mise en contact (12, 14) par rapport au corps de base (24, 44) est prévu.

10. Dispositif selon au moins l'une des revendications précédentes 4 à 9,
**caractérisé en ce que**
le dispositif (1) comprend au moins un système de guidage, lequel guide un déplacement des récipients (10) dans une direction s'étendant parallèlement au trajet de transport.
